## Europäisches Patentamt

## European Patent Office

## Office européen des brevets

(11) Veröffentlichungsnummer: **0 273 135**
**B1**

(12) **EUROPÄISCHE PATENTSCHRIFT**

(45) Veröffentlichungstag der Patentschrift:
**10.10.90**

(21) Anmeldenummer: **87115941.4**

(22) Anmeldetag: **30.10.87**

(51) Int. Cl.⁵: **B23K 37/04**

(54) Verfahren und Einrichtung zum Orientieren und Längsbewegen gerundeter Dosenzargen in bezug auf eine Schweissvorrichtung.

(30) Priorität: **09.12.86 CH 4906/86**

(43) Veröffentlichungstag der Anmeldung:
**06.07.88 Patentblatt 88/27**

(45) Bekanntmachung des Hinweises auf die Patenterteilung:
**10.10.90 Patentblatt 90/41**

(84) Benannte Vertragsstaaten:
**CH DE ES FR GB GR IT LI NL SE**

(56) Entgegenhaltungen:
**DE-A- 2 806 185**
**DE-C- 3 534 195**

(73) Patentinhaber: **ELPATRONIC AG, Baarerstrasse 117, CH-6300 Zug(CH)**

(72) Erfinder: **Depaoli, Albano, Dr., Berlinerring 11, D-7130 Mühlacker(DE)**
Erfinder: **Gysi, Peter, Rotenstein 3, CH-5454 Bellikon(CH)**

(74) Vertreter: **Hotz, Klaus, Dipl.-El.-Ing. / ETH, c/o SOUDRONIC AG Industriestrasse 35 Postfach 11, CH-8962 Bergdietikon(CH)**

## Beschreibung

Die Erfindung betrifft ein Verfahren und eine Einrichtung zum Orientieren und Längsbewegen gerundeter Dosenzargen in bezug auf eine Schweißvorrichtung zum Stumpfschweißen von Längskanten der Dosenzargen, wobei die Längskanten förderstromaufwärts von der Schweißvorrichtung einander gegenüberliegend an einem Führungskörper entlangbewegt werden.

Es ist vorgeschlagen worden (DE-Cl- 35 34 195), gerundete Dosenzargen, deren Längskanten miteinander stumpf verschweißt werden sollen, durch ein käfigartiges Kalibrierwerkzeug hindurchzuführen, von dem die Längskanten zunächst gegen Anlageflächen eines klingenartigen Führungskörpers gedrückt und dann unmittelbar aneinandergedrückt werden. Dabei hat es sich jedoch als schwierig erwiesen, die Längskanten, bis sie miteinander verschweißt worden sind, an jeglicher gegenseitigen Verschiebung vollständig zu hindern. Schon eine geringe gegenseitige Verschiebung in radialer Richtung genügt, um die entstehende Schweißnaht unansehnlich, unter Umständen sogar unbrauchbar zu machen. Eine gegenseitige Verschiebung der Längskanten in Ihrer Längsrichtung bewirkt hingegen, daß die stirnseitigen Ränder der Dosenzargen uneben sind, wodurch beim Anbringen von Dosendeckeln und -böden Schwierigkeiten entstehen können.

Der Erfindung liegt deshalb die Aufgabe zugrunde, ein Verfahren und eine Einrichtung der eingangs beschriebenen Gattung derart weiterzubilden, daß eine mit Hilfe des Führungskörpers einmal erreichte Orientierung der Längskanten bei dem Transport der Dosenzargen vom Führungskörper zur Schweißvorrichtung sicher beibehalten wird, und die Längskanten gleichmäßig aneinanderliegend in den Arbeitsbereich der Schweißvorrichtung gelangen.

Die Aufgabe ist bei dem eingangs beschriebenen Verfahren erfindungsgemäß dadurch gelöst, daß die Längskanten auf dem Weg der Dosenzargen vom Führungskörper zur Schweißvorrichtung ungleichpolig magnetisiert und dadurch aneinanderliegend gehalten werden.

Die Magnetkräfte sind bestrebt, die Längskanten, sobald sie vom Führungskörper freigegeben werden, in vollflächige gegenseitige Anlage zu bringen und in solcher Anlage zu halten, solange die Dosenzargen magnetisiert sind. Der Druck, mit dem die Längskanten zusammengehalten werden, ist im wesentlichen nur von der Stärke des Magnetfeldes abh ngig, nicht hingegen vom Durchmesser der Dosenzargen, der infolge von Ungenauigkeiten beim Zuschneiden von Platinen, aus denen die Dosenzargen gerollt werden, in gewissen Grenzen schwanken kann. Besonders wichtig ist, daß die Magnetkräfte weitgehend unabhängig von der Art, wie die Dosenzargen vom Führungskörper zur Schweißvorrichtung gefördert werden, jegliche gegenseitige Längsverschiebung der aneinanderliegenden Längskanten verhindern.

Gemäß einer Weiterbildung des erfindungsgemäßen Verfahrens wird die Magnetisierung auch zum Übertragen von Förderkräften auf die Dosenzargen benutzt.

Ferner kann die Lage der durch die Magnetisierung aneinanderliegend gehaltenen Längskanten auf dem Weg zwischen dem Führungskörper und der Schweißvorrichtung überwacht und bei Bedarf durch eine quer zu den Längskanten gerichtete Relativbewegung zwischen Führungskörper und Schweißvorrichtung korrigiert werden. Dabei ist es grundsätzlich möglich, entweder den Führungskörper oder die Schweißvorrichtung quer zu den Längskanten zu verstellen.

Die Magnetisierung der Dosenzargen hat den zusätzlichen Vorteil, daß die Lage der Längskanten durch Messen des bei der Magnetisierung im Bereich der Längskanten entstehenden magnetischen Streufeldes überwacht werden kann. Diese Überwachung läßt sich einfacher durchführen als beispielsweise eine optische Überwachung, die allerdings genauer sein kann.

Gegenstand der Erfindung ist ferner eine Einrichtung zum Durchführen des beschriebenen Verfahrens an einer Dosenschweißmaschine mit einem Kalibrierwerkzeug und einem Führungskörper, die eine Förderachse definieren, einer Schweißvorrichtung, insbesondere Laserschweißvorrichtung, die eine quer zur Förderachse angeordnete Arbeitsachse aufweist, und einem Förderer zum Fördern der Dosenzargen längs der Förderachse. Eine solche Einrichtung ist erfindungsgemäß dadurch weitergebildet, daß beiderseits einer Ebene, welche die Förderachse enthält, je ein Pol eines Magneten angeordnet ist, der eine Auflagefläche für ein Förderband des Förderers aufweist.

Die erfindungsgemäße Einrichtung ist besonders eintach, wenn beiden Polen des Magneten ein gemeinsames Förderband zugeordnet ist, das diametral gegenüber der Schweißvorrichtung angeordnet ist. Es können aber auch zwei parallele Förderbänder vorgesehen sein, die je einem der beiden Pole zugeordnet sind und einen für das Schweißen ausreichenden Spalt zwischen sich freilassen.

Es ist ferner vorteilhaft, wenn die Schweißvorrichtung quer zur Förderachse verstellbar ist und ihre Verstellung durch einen zwischen ihr und dem Führungskörper angeordneten Sensor gesteuert ist.

Der Sensor kann ein auf magnetische Streufelder ansprechender Sensor sein.

Ein Ausführungsbeispiel der Erfindung wird im folgenden anhand schematischer Zeichnungen mit weiteren Einzelheiten erläutert. Es zeigt:

Fig. 1 eine Schrägansicht einer erfindungsgemäßen Einrichtung,

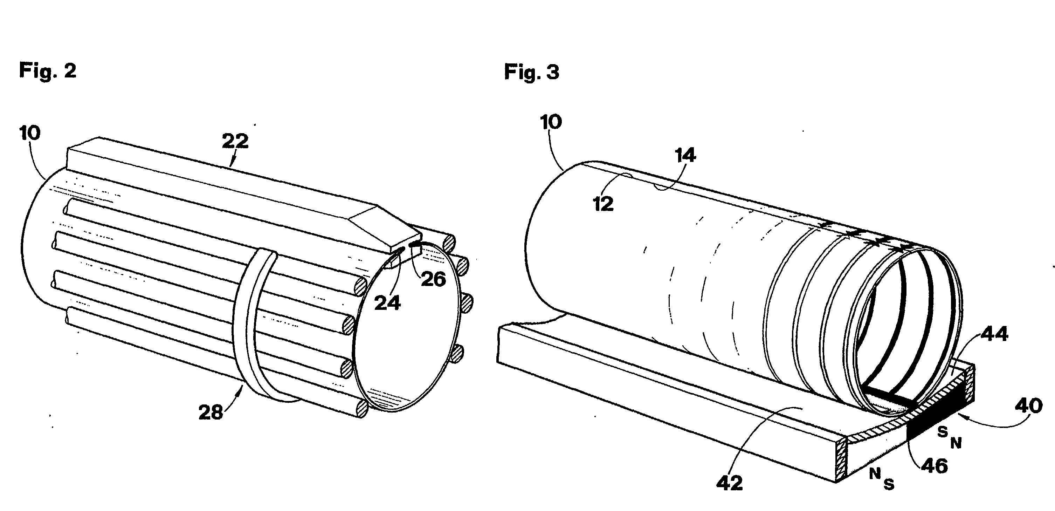

Fig. 2 einen vergrößerten Ausschnitt aus Fig. 1, von der Ebene II-II aus betrachtet, und

Fig. 3 einen anderen vergrößerten Ausschnitt aus Fig. 1, von der Ebene III-III aus betrachtet.

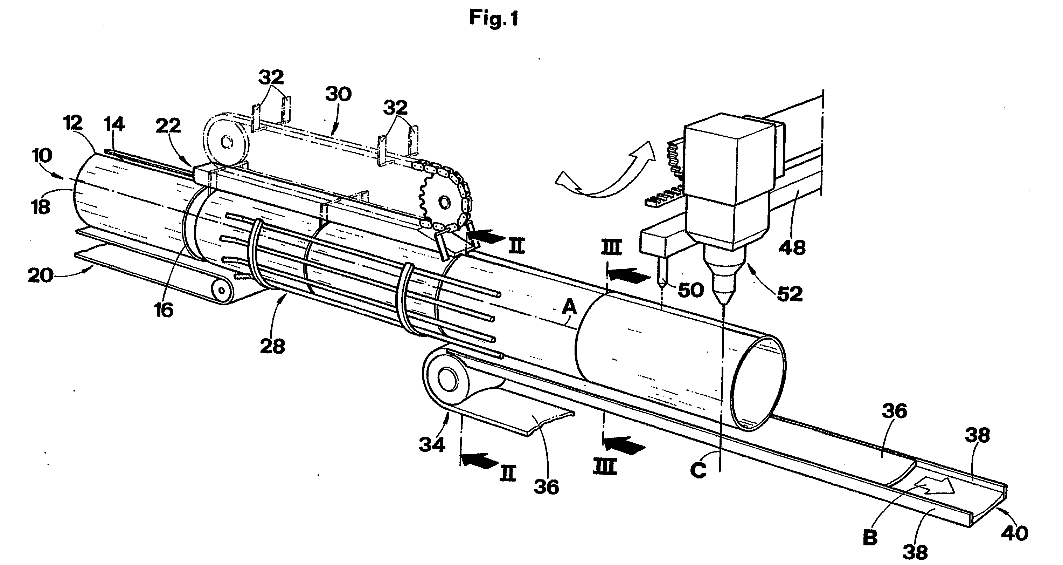

Die dargestellte Einrichtung gehört zu einer Maschine zum Herstellen von Dosenzargen 10 mit stumpf miteinander verschweißten Längskanten 12 und 14. Die Dosenzargen 10 werden von einer nicht dargestellten Vorrichtung üblicher Bauart gerundet und, wie im linken Teil der Fig. 1 ersichtlich, in einer Stellung bereitgehalten, in der ihre beiden Längskanten 12 und 14 in geringem Abstand voneinander oben angeordnet sind, und ihre beiden Stirnseiten 16 und 18 in je einer senkrechten Ebene liegen. Aus dieser Stellung heraus wird bei jedem Arbeitszyklus der Maschine eine Dosenzarge 10 mittels eines Bandförderers 20 einem Führungskörper 22 zugeführt.

Der Führungskörper 22 hat die Form einer Schiene, die oberhalb des in Fig. 1 dargestellten Endes des Bandförderers 20 beginnt, sich parallel zu dessen Förderrichtung erstreckt und zwei einander waagerecht gegenüberliegende seitliche Längsnuten 24 und 26 aufweist. Die Längskanten 12 und 14 werden in je eine der Längsnuten 24 und 26 eingeschoben und werden in diesen Nuten derart geführt, daß sie sich bei weiterer Vorwärtsbewegung einander nähern.

In geringem Abstand hinter dem Beginn des Führungskörpers 22 beginnt ein käfigartiges Kalibrierwerkzeug 28, das die in den Längsnuten 24 und 26 gefangene Dosenzarge 10 umgreift undderart führt, daß jede der Längskanten 12 und 14 sicher am Grund der zugehörigen Längsnut 24 bzw. 26 entlanggleitet. Das Kalibrierwerkzeug 28 ist nur schematisch dargestellt; es kann in üblicher Weise mit radial federnden Rollen ausgestattet sein. Führungskörper 22 und Kalibrierwerkzeug 28 definieren eine Förderachse A, die mit der geometrischen Achse jeder Dosenzarge 10 bei deren Bewegung, in Fig. 1 von links nach rechts, übereinstimmt.

Oberhalb des schienenartigen Führungskörpers 22 ist ein Kettenförderer 30 angeordnet. Dieser hat in Abständen, die der Länge der Dosenzargen 10 entsprechen, paarweise angeordnete Mitnehmer 32, von denen jeweils die auf dem unteren Trum des Kettenförderers sich vorwärtsbewegenden Mitnehmerpaare den Führungskörper 22 rittlings übergreifen und sich an die hintere Stirnseite 18 je einer Dosenzarge 10 anlegen, um diese vorwärts zu schieben.

Der Kettenförderer 30 endet ungefähr in der gleichen Ebene II-II wie der Führungskörper 22. Ungefähr in der gleichen Ebene II-II beginnt ein unterhalb der Dosenzargen 10 angeordneter weiterer Förderer 34, der sich in seinem Anfangsbereich mit dem Kalibrierwerkzeug 28 überlappt, so daß jede einzelne Dosenzarge 10 noch vom Kalibrierwerkzeug 28 geführt ist, wenn sie auf diesen weiteren Förderer 34 gelangt.

Der Förderer 34 hat ein endloses Förderband 36 aus unmagnetischem Material, beispielsweise Gummi oder gummiartigem Kunststoff, dessen oberes Trum zwischen zwei Führungsleisten 38 genau parallel zur gemeinsamen Förderachse A des Führungskörpers 22 und des Käfigs 28 geführt ist. Das obere Trum des Förderbandes 36 liegt auf einem Magneten 40, im dargestellten Beispiel einem Permanentmagneten, dessen Pole $N_S$ und $S_N$ zu diesem Zweck je eine leicht konkave Auflagefläche 42 bzw. 44 aufweisen. Die beiden Pole $N_S$ und $S_N$ sind durch eine magnetisch nicht leitende Zwischenschicht 46 voneinander getrennt.

Die von dem Pol $N_S$ ausgehenden magnetischen Feldlinien gelangen zu einem großen Teil durch das Förderband 36 hindurch in die daraufliegende Dosenzarge 10 und setzen sich im Blech der Dosenzarge 10 fort. Ein Teil des Magnetflusses schließt sich auf kurzem Wege über den unteren, die Zwischenschicht 46 überbrückenden Teil der Dosenzarge 10 zum Magnetpol $S_N$. Ein Teil des Magnetflusses folgt jedoch dem Blech der Dosenzarge 10 nach oben und erzeugt zwischen den Längskanten 12 und 14 magnetische Anziehungskräfte.

Diese Anziehungskräfte bewirken schon in kurzem Abstand förderstromabwärts vom Führungskörper 22, daß die Längskanten 12 und 14 sich fest aneinanderlegen und sich nicht mehr voneinander trennen, während die betreffende Dosenzarge 10 vom Förderer 34 weitertransportiert wird. Die unmittelbar vom Magneten 40 auf die Dosenzargen 10 übertragenen Kräfte sorgen dafür, daß die Dosenzargen hintereinander vom Förderband 36 mitgenommen werden, das sich in Richtung des Pfeils B in Fig. 1 mit gleichförmiger Geschwindigkeit bewegt.

Die Geschwindigkeit des Förderbandes 36 ist etwas geringer als diejenige des Kettenförderers 30; infolgedessen legt sich an die hintere Stirnseite 18 einer Dosenzarge 10, die den Einwirkungsbereich des Kettenförderers 30 verlassen hat, die vordere Stirnseite 16 der nächstfolgenden Dosenzarge lückenlos an. Dabei trägt der Magnetfluß dazu bei, daß sich die Stirnseiten 16 und 18 in bezug zueinander orientieren, so daß die hintereinanderliegenden Dosenzargen 10 wie ein ununterbrochenes Rohr wirken.

Förderstromabwärts vom Führungskörper 22 in einem Abstand, der etwas größer ist als die Länge jeder einzelnen Dosenzarge 10, ist an einem Schlitten 48 ein Sensor 50 angeordnet. Der Schlitten 48 trägt zusätzlich zu dem Sensor 50 eine Schweißvorrichtung 52 mit senkrechter Arbeitsachse C.

Der Sensor 50 steuert den Schlitten 48 über eine nicht dargestellte Schaltung, die von herkömmlicher Art sein kann, derart, daß die Arbeitsachse C der Schweißvorrichtung 52 stets die beiden aneinanderliegenden Längskanten 12 und 14 berührt, die miteinander verschweißt werden sollen. Die Schweißvorrichtung 52 ist vorzugsweise eine Laserkanone, und die Arbeitsachse C stimmt mit der Achse des Laserstrahls überein.

Anstelle einer geradlinigen Verschiebung kommt auch eine Schwenkung der Schweißvorrichtung 52 um eine zur Förderachse A parallele Achse in Frage; auch damit läßt sich erreichen, daß der Laserstrahl stets die beiden aneinanderliegenden Längskanten 12 und 14 trifft, auch wenn diese, beispielsweise infolge von Durchmesserschwankungen der zu verschweißenden Dosenzarge, eine von der Sollage abweichende Lage haben sollten.

Bei Lageabweichungen der Längskanten 12 und 14 verändert sich die Lage des magnetischen Streufeldes im Bereich dieser Längskanten. Solche Lageänderungen des Streufeldes lassen sich beispielsweise mit Hallgeneratoren feststellen die den Sensor 50 bilden. Alternativ kann der Sensor 50 ein optischer Sensor sein.

**Patentansprüche**

1. Verfahren zum Orientieren und Längsbewegen gerundeter Dosenzargen (10) in bezug auf eine Schweißvorrichtung (52) zum Stumpfschweißen von Längskanten (12, 14) der Dosenzargen (10), wobei die Längskanten (12, 14) förderstromaufwärts von der Schweißvorrichtung (52) einander gegenüberliegend an einem Führungskörper (22) entlangbewegt werden, dadurch gekennzeichnet, daß die Längskanten (12, 14) auf dem Weg der Dosenzargen (10) vom Führungskörper (22) zur Schweißvorrichtung (52) ungleichpolig magnetisiert und dadurch aneinanderliegend gehalten werden.

2. Verfahren nach Anspruch 1, dadurch gekennzeichnet, daß die Magnetisierung auch zum Übertragen von Förderkräften auf die Dosenzargen (10) benutzt wird.

3. Verfahren nach Anspruch 1 oder 2, dadurch gekennzeichne, daß die Lage der durch die Magnetisierung aneinanderliegend gehaltenen Längskanten (12, 14) auf dem Weg zwischen dem Führungskörper (22) und der Schweißvorrichtung (52) überwacht und bei Bedarf durch eine quer zu den Längskanten (12, 14) gerichtete Relativbewegung zwischen Führungskörper (22) und Schweißvorrichtung (52) korrigiert wird.

4. Verfahren nach Anspruch 3, dadurch gekennzeichnet, dass die Lage der Längskanten (12, 14) durch Messen des bei der Magnetisierung im Bereich der Längskanten (12, 14) entstehenden magnetischen Streufeldes überwacht wird.

5. Einrichtung zum Durchführen des Verfahrens nach einer der Ansprüche 1 bis 4 an einer Dosenschweissmaschine mit einem Kalibrierwerkzeug (28) und einem Führungskörper (22), die eine Förderachse (A) definieren, einer Schweissvorrichtung (52), insbesondere Laserschweissvorrichtung, die eine quer zur Förderachse (A) angeordnete Arbeitsachse (C) aufweist, und einem Förderer (34) zum Fördern der Dosenzargen (10) längs der Förderachse (A), dadurch gekennzeichnet, dass beiderseits eine Ebene, welche die Förderachse (A) enthält, je ein Magnet (40) mit den Polungen (N$_S$ und S$_N$) getrennt durch eine nichtmagnetische Schicht (46) angeordnet ist, die eine Auflagefläche (42, 44) für ein Förderband (36) des Förderers (34) aufweisen.

6. Einrichtung nach Anspruch 5, dadurch gekennzeichnet, dass beiden Magneten (40) ein gemeinsames Förderband (36) zugeordnet ist, das diametral gegenüber der Schweissvorrichtung (52) angeordnet ist.

7. Einrichtung nach Anspruch 5 oder 6, dadurch gekennzeichnet, dass die Schweissvorrichtung (52) quer zur Förderachse (A) verstellbar ist und ihre Verstellung durch einen zwischen ihr und dem Führungskörper (22) angeordneten Sensor (50) gesteuert ist.

8. Einrichtung nach Anspruch 7, dadurch gekennzeichnet, dass der Sensor (50) ein auf magnetische Streufelder ansprechender Sensor ist.

**Claims**

1. A method for the orientation and longitudinal movement of rounded can bodies (10) in relation to a welding apparatus (52) for the butt-welding of longitudinal edges (12, 14) of the can bodies (10), the longitudinal edges (12, 14) being moved, situated opposite one another, along a guide member (22) upstream, in the conveying direction, of the welding apparatus (52), characterised in that, on the way from the guide member (22) to the welding apparatus (52), the longitudinal edges (12, 14) of the can bodies (10) are magnetized with opposite polarity and are thereby held contiguous with one another.

2. A method according to Claim 1, characterised in that the magnetization is also used to transmit conveying forces to the can bodies (10).

3. A method according to Claim 1 or 2, characterised in that the position of the longitudinal edges (12, 14) held contiguous with one another by the magnetization is monitored on the way between the guide member (22) and the welding apparatus (52) and is corrected, if necessary, by a relative movement between guide member (22) and welding apparatus (52) in a direction transverse to the longitudinal edges (12, 14).

4. A method according to Claim 3, characterised in that the position of the longitudinal edges (12, 14) is monitored by measuring the stray magnetic fiels developing in the region of the longitudinal edges (12, 14) during the magnetization.

5. A device for carrying out the method according to any one of Claims 1 to 4 on a can welding machine having a sizing tool (28) and a guide member (22) which define a conveying axis (A), a welding apparatus (52), particularly a laser welding apparatus which has a working axis (C) disposed transversely to the conveying axis (A), and a conveyor (34) for conveying the can bodies (10) along the conveying axis (A), characterised in that disposed one at each side of a plane which contains the conveying axis (A) are magnets (40) with the polarities (N$_S$ and S$_N$) separated by a non-magnetic layer (46), which magnets comprise a supporting surface (42, 44) for a conveyor belt (36) of the conveyor (34).

6. A device according to Claim 5, characterised in that, associated with the two magnets (40) is a common conveyor belt (36) which is disposed diametrically opposite the welding apparatus (52).

7. A device according to Claim 5 or 6, characterised in that the welding apparatus (52) is adjustable transversely to the conveying axis (a) and its adjustment is controlled by a sensor (50) disposed between it and the guide member (22).

8. A device according to Claim 7, characterised in that the sensor (50) is a sensor responding to stray magnetic fields.

**Revendications**

1. Procédé pour l'orientation et le déplacement longitudinal de corps de boîte (10) cintrés, par rapport à un dispositif de soudage (52), pour le soudage bord à bord des bords longitudinaux (12, 14) des corps de boîte (10), les bords longitudinaux (12, 14), étant déplacés le long d'un corps de guidage (22), en amont du dispositif de soudage (52), en se trouvant l'un sur l'autre, caractérisé en ce que, sur le parcours des corps de boîte (10) du corps de guidage (22) au dispositif de soudage (52), les bords longitudinaux (12, 14) sont magnétisés avec des polarités inversées et sont ainsi maintenus l'un contre l'autre.

2. Procédé selon la revendication 1, caractérisé en ce que la magnétisation est utilisée aussi pour transmettre des efforts de transport sur les corps de boîte (10).

3. Procédé selon la revendication 1 ou 2, caractérisé en ce que la position des bords longitudinaux (12, 14), maintenus appliqués l'un contre l'autre par la magnétisation, est contrôlée sur le parcours entre le corps de guidage (22) et le dispositif de soudage (52) et, au .

besoin, corrigée par un déplacement mutuel, perpendiculaire aux bords longitudinaux (12, 14), du corps de guidage (22) et du dispositif de soudage (52).

4. Procédé selon la revendication 3, caractérisé en ce que la position des bords longitudinaux (12, 14) est contrôlée par mesure du champ de dispersion magnétique, engendré par la magnétisation, dans la région des bords longitudinaux (12, 14).

5. Dispositif de mise en oeuvre du procédé selon l'une quelconque des revendications 1 à 4, sur une machine à souder les boîtes, comportant un outil de calibrage (28) et un corps de guidage (22) qui définissent un axe de transport (A), comportant un dispositif de soudage (52), en particulier un dispositif de soudage à

laser, qui présente un axe de travail (C) perpendiculaire à l'axe de transport (A), et comportant un convoyeur (34) pour le transport des corps de boîte (10), le long de l'axe de transport (A), caractérisé en ce que de part et d'autre d'un plan qui contient l'axe de transport (A), on place un aimant (40) dont les pôles ($N_S$ et $S_N$) sont séparés par une couche (46) non magnétique, les pôles présentant une surface de support (42, 44) pour une bande de convoyage (36) du convoyeur (34).

6. Dispositif selon la revendication 5, caractérisé en ce qu'on associe aux deux aimants (40) une bande de convoyage (36) commune qui est diamétralement opposée au dispositif de soudage (52).

7. Dispositif selon la revendication 5 ou 6, caractérisé en ce que le dispositif de soudage (52) est déplaçable perpendiculairement à l'axe de transport (A) et son déplacement est commandé par un capteur (50), placé entre celui-ci et le corps de guidage (22).

8. Dispositif selon la revendication 7, caractérisé en ce que le capteur (50) réagit à des champs de dispersion magnétiques.

Fig.1

Fig. 2

10

28

22

24

26

Fig. 3

10

12

14

42

N
S

S
N

46

44

40